# EUROPÄISCHE PATENTSCHRIFT

(11) **EP 1 699 654 B1**
(45) Veröffentlichungstag und Bekanntmachung des Hinweises auf die Patenterteilung: **12.08.2009**
(21) Anmeldenummer: 04802835.1
(22) Anmeldetag: 26.11.2004
(51) Int. Cl.: B60J 7/057, B60J 7/12, B60J 7/20

(54) **CABRIOLET-FAHRZEUG**
CONVERTIBLE
CABRIOLET

(30) Priorität: 06.12.2003 DE 10357098
(43) Veröffentlichungstag der Anmeldung: 13.09.2006
(73) Patentinhaber: Wilhelm Karmann GmbH, 49084 Osnabrück (DE)
(72) Erfinder: BAUM, Marian, Daniel, 49076 Osnabrück (DE); HOLLENBECK, Sven, 49492 Westerkappeln (DE)
(86) Internationale Anmeldenummer: PCT/DE2004/002626
(87) Internationale Veröffentlichungsnummer: WO 2005/056323

(56) Entgegenhaltungen:
- EP-A- 1 052 127
- DE-A1- 10 052 001
- US-A- 3 180 675
- US-A1- 2003 057 728

## Beschreibung

Die Erfindung betrifft ein Cabriolet-Fahrzeug mit einem beweglichen Dach nach dem Oberbegriff des Anspruchs 1 sowie eine Halterung mit mehreren Anschlußflanschen nach dem Oberbegriff des Anspruchs 7.

Es ist bekannt, bei einem Cabriolet-Fahrzeug mit hydraulisch bewegbarem Dach in der Karosserie eine Halterung anzuordnen, die eine Pumpe zur Druckerzeugung, ein Steuergerät und einen Anschlußkörper zum Anschluß von ausgehenden hydraulischen Leitungen aufweist, die ihrerseits weitere Hydraulikzylinder als Antriebseinheiten zur Dachbewegung ansteuern.

Da in vielen Fällen das Dach im geschlossenen Zustand mit seinem rückwärtigen Bereich auf einem karosserieseitigen Deckelteil gehalten ist, das zum Ablegen des Daches geöffnet werden muß, ergibt sich weiterer Montageaufwand für Antriebsmittel, die dessen Bewegung ermöglichen sollen. Die Montage ist daher insgesamt kompliziert und in mehreren Schritten durchzuführen.

Die EP 1 052 127 A1 zeigt eine zentrale Steuereinheit, von der aus mehrere Hydraulikleitungen ausgehen, die zu einzeln am Fahrzeug anmontierten Antriebszylindern ausgehen.

Die US-A-3,180,675 zeigt eine Motoreinheit, die separat in der Karosserie gehalten ist und von der aus flexible Hydraulikleitungen zu einem Antriebszylinder für die Dachbewegung ausgehen.

Die DE 196 43 225 A1 zeit ein Cabriolet-Fahrzeug mit einer in der Karosserie montierbaren Halterung, die als Aggregateträger für ein gesamtes hydraulisches Antriebssystem dient. Dieser Aggregatetäger ist im wesentlichen U-förmig ausgebildet und erstreckt sich nahezu über die gesamte Fahrzeuginnenbreite, so daß der Raumbedarf für ein solches Teil erheblich ist und insbesondere eine Durchlademöglichkeit zwischen einem Kofferraum und einem Verdeckaufnahmeraum behindert wird. Zudem ist die Montage einer derart breiten und schweren Baugruppe aufwendig.

Der Erfindung liegt das Problem zugrunde, hier eine Verbesserung zu erreichen.

Die Erfindung löst dieses Problem durch ein Cabriolet-Fahrzeug mit den Merkmalen des Anspruchs 1 sowie durch eine Halterung mit den Merkmalen des Anspruchs 6. Hinsichtlich weiterer vorteilhafter Ausgestaltungen der Erfindung wird auf die Ansprüche 2 bis 5 verwiesen.

Erfindungsgemäß brauchen ein oder mehrere Antriebsorgan(e) für die Bewegung des Deckelteils nicht gesondert an der Karosserie anmontiert zu werden, sondern können mit an der Halterung, die auch Elemente für die Dachbewegung trägt, festgelegt werden. Diese Halterung kann daher vor ihrer Montage an der Karosserie vollständig bestückt und als Modul eingesetzt werden, was den Montageaufwand am Fahrzeug verringert. Das oder die an der Halterung anmontierte(n) Antriebsorgan(e) für das Deckelteil muß oder müssen dann nur noch mit ihrem jeweiligen freien Ende an diesem befestigt. Die gesamte Einheit kann erfindungsgemäß besonders raumsparend in einer Seitentasche der Karosserie vor oder hinter einem Radhaus montierbar sein. Damit ist der Platzbedarf gering, Kofferraum und Verdeckkastendeckel können ineinander übergehen, zudem ist die einseitig anzumontierende Einheit einfach zu montieren.

Wenn vorteilhaft die Halterung außerhalb der Karosserie nicht nur vormontierbar, sondern auch mit Hydraulikflüssigkeit befüllbar und auf Funktion sowohl des oder der Antriebsorgan(e) für das Deckelteil als auch der Antriebseinheiten für die Dachbewegung überprüfbar ist, ist eine zusätzliche Vereinfachung des Produktionsprozesses und eine Verlagerung von Arbeitsschritten aus der Endmontage in eine vorgelagerte Modulfertigung erreicht.

Insbesondere ist eine Minimierung der benötigten Teile erreicht, wenn vorteilhaft das Deckelteil über ein einziges Antriebsorgan beweglich ist, was in Verbindung mit einem Deckelteil aus Leichtbaumaterial, etwa aus Kunststoff oder metallischem Schaum möglich ist und erstmals mit der Erfindung auch mit einem exzentrischen Antriebsorgan realisiert wird.

Weitere Vorteile und Merkmale der Erfindung ergeben sich aus einem in der Zeichnung zumindest schematisch dargestellten und nachfolgend beschriebenen Ausführungsbeispiel des Gegenstandes der Erfindung.

In der Zeichnung zeigt:

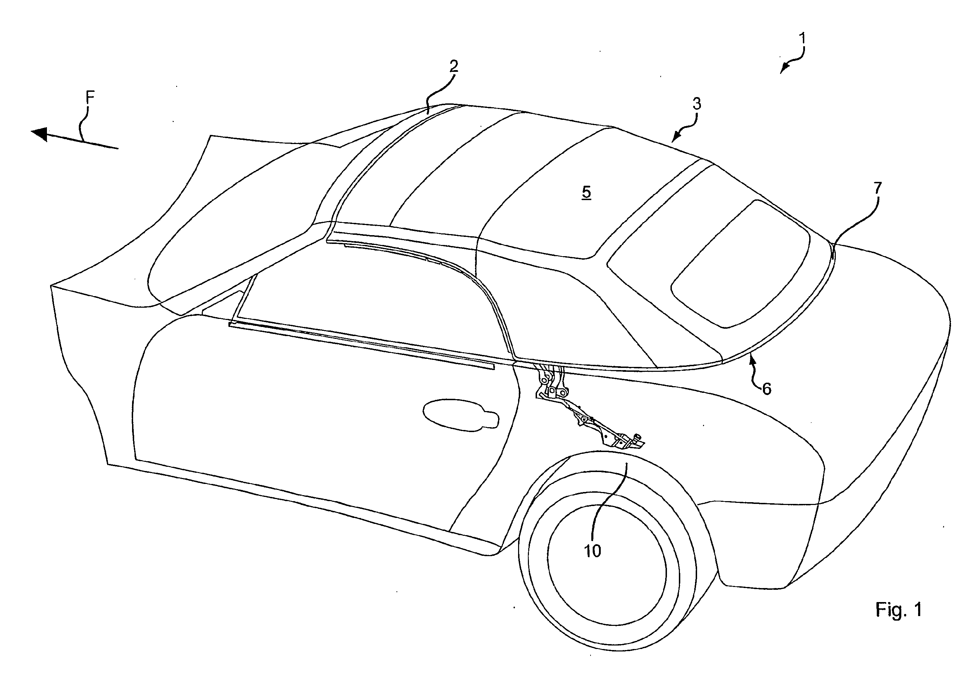

- Fig. 1: ein erfindungsgemäßes Kraftfahrzeug in perspektivischer Ansicht von schräg hin- ten mit einem vollständig geschlossenen Dach,
- Fig. 2: eine ähnliche Ansicht wie Fig. 1, jedoch ohne eingezeichneten Dachbezug und dafür mit transparent eingezeichneter Karosse- rie und Durchsicht auf die in der Karos- serie montierte Halterung sowie An- triebsteile des Daches und des Deckel- teils,
- Fig. 3: eine ähnliche Ansicht wie Fig. 2, jedoch vor Montage des die Halterung umfassen- den Moduls und daher ohne eine umgebende Kraftfahrzeugkarosserie,
- Fig. 4: die in den Figuren 2 und 3 eingezeichne- te Halterung vor ihrer Montage, jedoch schon im bestückten Zustand, in Einzel- teilansicht,
- Fig. 5: die Halterung nach Fig. 4 in noch unbe- stücktem Zustand.

In den Zeichnungsfiguren ist generell ein zweisitziges Fahrzeug 1 dargestellt. Die Erfindung ist jedoch ebensogut auf ein beispielsweise mit einer Rückbank versehenes vier- oder fünfsitziges Cabriolet-Fahrzeug anwendbar.

Das Fahrzeug 1 umfaßt in seinem oberen Bereich und an einen Windschutzscheibenrahmen 2 mittelbar oder unmittelbar angrenzend ein über Antriebseinheiten 4 bewegliches Dach 3, das zumindest bereichsweise einen flexiblen Dachbezug 5 und/oder mehrere starre Plattenteile - hier nicht eingezeichnet - umfassen kann. Die Dachgestaltung kann je nach Bedarf ausgebildet sein.

Im Ausführungsbeispiel umfaßt das Dach 3 in seinem hinteren Endbereich einen Spannbügel 6, mit dem es auf einem Deckelteil 7 der Karosserie aufliegt.

Es ist jedoch nicht zwingend, daß das Dach 3 auf dem Deckelteil 7 aufliegt, sondern dieses kann beispielsweise auch hinter einem rückwärtigen Dachabschluß liegen. In jedem Fall muß das Deckelteil 7 zum Öffnen und Schließen des Daches 3 bewegt werden. Für die Deckelteilbewegung ist zumindest ein Antriebsorgan 8, hier ein Hydraulikzylinder, vorgesehen.

Im Ausführungsbeispiel ist das Deckelteil 7 aus einem Leichtbaumaterial gebildet. Seine Auf- und Zubewegung wird über lediglich ein einziges Antriebsorgan 8 bewirkt. Dieses ist zudem nur einer Querseite des Deckelteils 7 zugeordnet, also weit außerhalb des Zentrums gerückt.

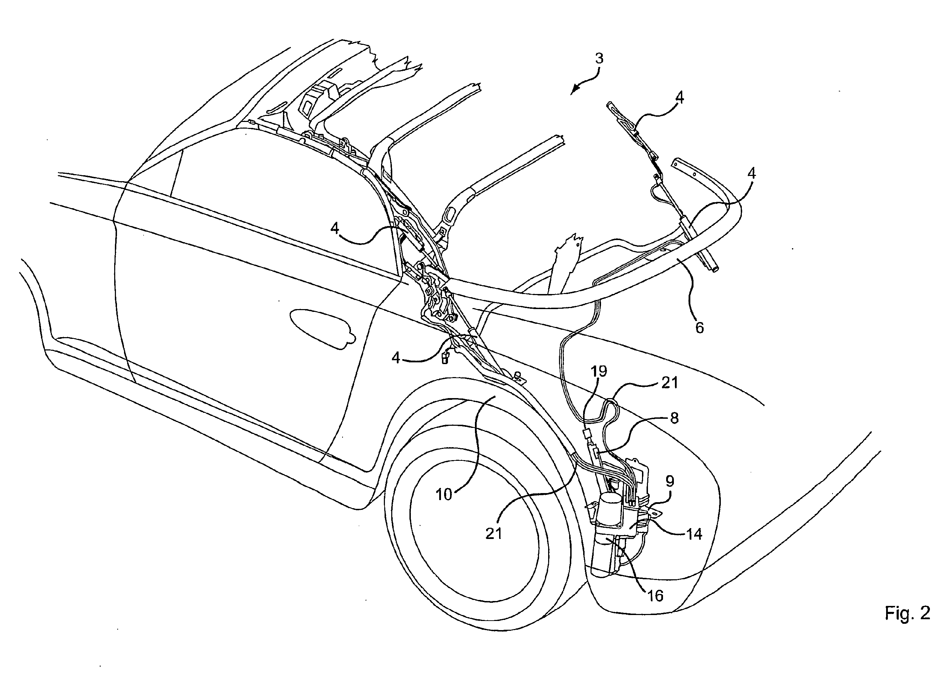

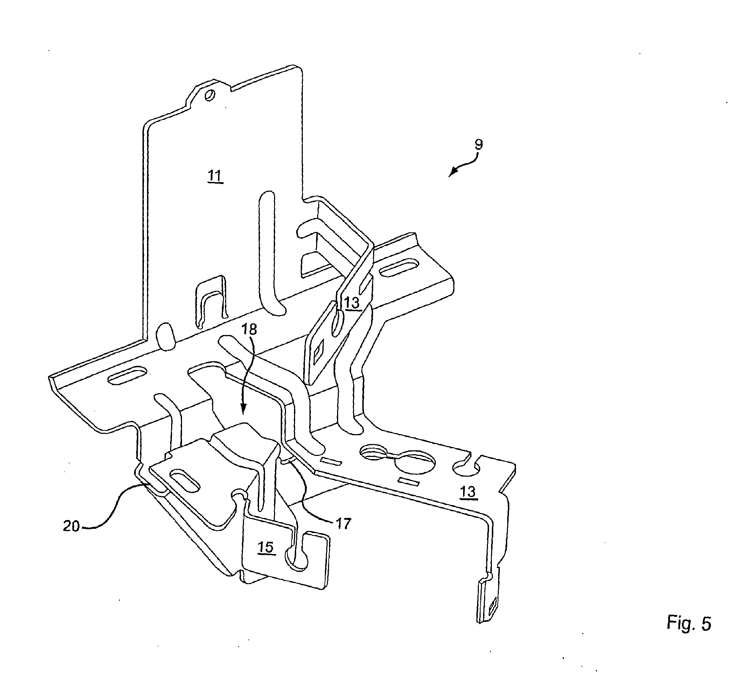

Das Antriebsorgan 8 ist einenends an einer insgesamt mit 9 bezeichneten und in Figur 5 als Einzelteil dargestellten Halterung befestigt. Durch die nur einseitige Anordnung des Antriebsorgans 8 ist es möglich, die Halterung 9 in einer Karosserietasche seitlich vor oder hinter einem Radhaus 10 platzsparend anzuordnen (Fig. 2).

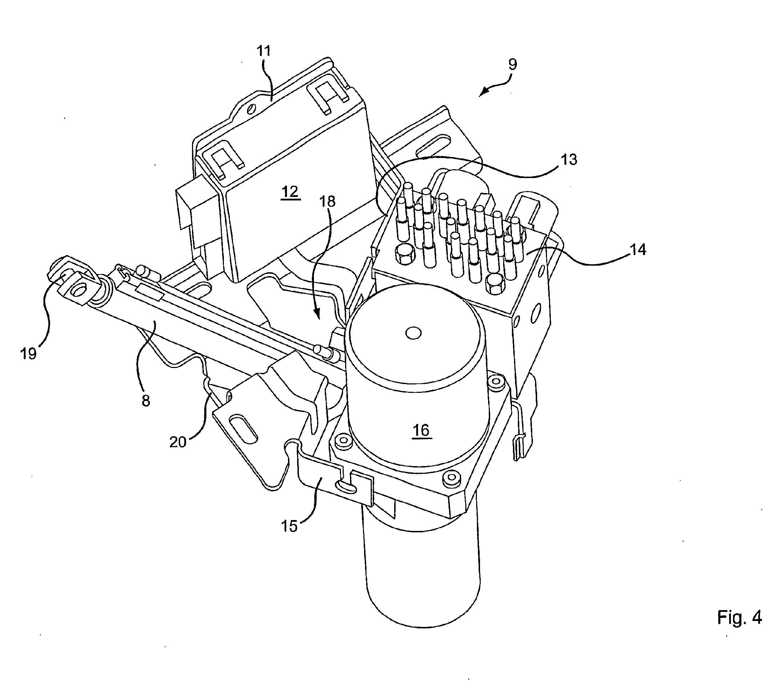

Die Halterung 9 kann einstückig aus einem mehrfach abgekanteten Blech gebildet sein. Sie weist einen ersten Anschlußflansch 11 zur Halterung einer Steuereinheit 12, einen zweiten Anschlußflansch 13 zur Halterung von Hydraulikanschlüssen 14 für Steuerleitungen und einen dritten Anschlußflansch 15 zur Halterung einer Hydraulikpumpe 16 auf. Zudem ist im unteren Bereich ein Anschlußflansch 17 zur Anmontage des Antriebsorgans 8 für das Deckelteil 7 vorgesehen, das im montierten Zustand eine Durchtrittsöffnung 18 der Halterung 9 durchgreift und dadurch nach oben weisen kann (Fig. 4). Das freie Ende 19 des Antriebsorgans 8 befindet sich damit bei montierter Halterung 9 in einer Stellung, in der es mit dem Deckelteil 7 verbunden werden kann. Die Durchtrittsöffnung 18 kann eine Auflagemöglichkeit 20, hier eine Kante, für das Antriebsorgan 18 umfassen, so daß dieses trotz einer schwenkbeweglichen Anordnung an der Halterung 9 nicht nach unten wegschwenken kann und das freien Ende montagefreundlich nach oben weist.

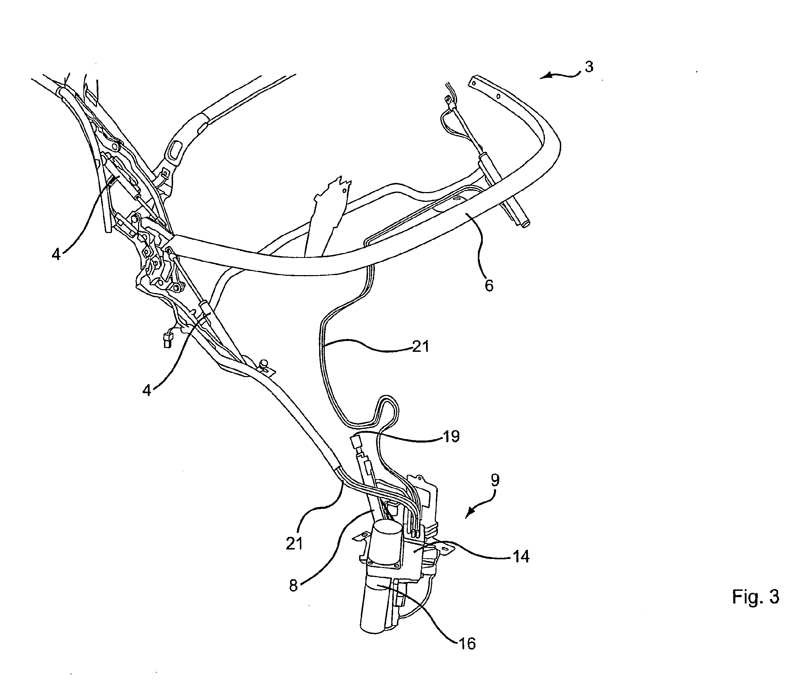

Die Halterung ist vollständig außerhalb der Karosserie bestückbar (Fig. 4) und auch mit dem Dach 3 über die Steuerleitungen 21 verbindbar, so daß bereits vor der Montage die in Figur 3 gezeigte Einheit nach Befüllung der Steuerleitungen 21 mit Hydraulikflüssigkeit auf Funktion sowohl bezüglich des Antriebsorgans 8 als auch bezüglich der Dachbewegung überprüfbar ist.

Die in Figur 3 gezeigte Einheit kann dann als vollständiges Modul der Montage der Karosserie zugeführt werden, so daß sich die in Figur 2 gezeigte montierte Stellung ergibt - wobei der Bezug 5 nur der Übersicht halber nicht mit dargestellt ist.

Es genügt im hier gezeichneten Ausführungsbeispiel lediglich eine einzige Halterung 9 der genannten Art, so daß sowohl das Zusatzgewicht als auch der Platzbedarf minimiert sind.

## Patentansprüche

1. Cabriolet-Fahrzeug (1) mit einem beweglichen Dach (3) und zumindest einem beweglichen Deckelteil (7), das in seiner Schließstellung einen in der Karosserie gelegenen Aufnahmebereich für das geöffnete Dach (3) abdeckt und das über zumindest ein Antriebsorgan (8) aufbeweglich ist, welches an einer in der Karosserie montierbaren Halterung (9) angeordnet ist, die auch Träger zumindest einer Steuereinheit (12), einer Hydraulikpumpe (16) und von Anschlüssen (14) von zu Antriebseinheiten (4) für die Dachbewegung führenden Steuerleitungen (21) ist,
**dadurch gekennzeichnet,**
**daß** die Halterung (9) in einer Seitentasche der Karosserie vor oder hinter einem Radhaus (10) montierbar ist.

2. Cabriolet-Fahrzeug (1) nach Anspruch 1,
**dadurch gekennzeichnet,**
**daß** die Halterung (9) außerhalb der Karosserie vormontierbar und auf Funktion sowohl des oder der Antriebsorgan(e) (8) für das Deckelteil (7) als auch der Antriebseinheiten (4) für die Dachbewegung überprüfbar ist.

3. Cabriolet-Fahrzeug (1) nach einem der Ansprüche 1 oder 2,
**dadurch gekennzeichnet,**
**daß** die Halterung (9) ein einstückiges, mehrfach abgekantetes und mit Bohrungen und Anschlußflanschen (11;13;15;17) versehenes Blech umfaßt.

4. Cabriolet-Fahrzeug (1) nach einem der Ansprüche 1 bis 3,
**dadurch gekennzeichnet,**
**daß** das Deckelteil (7) über ein einziges Antriebsorgan (8) beweglich ist.

5. Cabriolet-Fahrzeug (1) nach einem der Ansprüche 1 bis 4,
**dadurch gekennzeichnet,**
**daß** das Antriebsorgan (8) eine Durchtrittsöffnung (18) der Halterung (9) durchgreift.

## Claims

1. A convertible vehicle (1) with a movable roof (3) and at least one movable lid part (7), said lid part (7), when it is in its closed position, covering a receiving area that is located in the vehicle body and receives the roof (3) in its opened position, and said lid part (7) being openable by means of at least one drive element (8), which is arranged on a support (9) that can be mounted in the vehicle body, said support (9) also carrying at least a control unit (12), a hydraulic pump (16), and connections (14) of control lines (21) that lead to drive units (4) for the roof movement,
**characterized in that**
the support (9) can be mounted in a side pocket of the vehicle body, in front of or behind a wheel well (10).

2. Convertible vehicle (1) according to claim 1,
**characterized in that**
the support (9) can be preassembled and tested outside the vehicle body for the functionality of both the drive element(s) (8) for the lid part (7) and of the drive units (4) for the roof movement.

3. Convertible vehicle (1) according to any one of claims 1 or 2,
**characterized in that**
the support (9) comprises an integral metal sheet, which is chamfered several times and is provided with bores and connecting flanges (11;13;15;17).

4. Convertible vehicle (1) according to any one of claims 1 to 3,
**characterized in that**
the lid part (7) is movable via one single drive element (8).

5. Convertible vehicle (1) according to any one of claims 1 to 4,
**characterized in that**
the drive element (8) passes through a passage opening (18) of the support (9).

## Revendications

1. Véhicule cabriolet (1) comprenant un toit mobile (3) et au moins un couvercle mobile (7), ledit couvercle (7) couvrant, dans sa position fermée, une zone de logement, qui se trouve dans la carrosserie et dans laquelle le toit ouvert (3) vient se loger, et ledit couvercle (7) étant ouvrable au moyen d'au moins un élément d'entraînement (8), qui est disposé sur un support (9), ledit support (9) pouvant être monté dans la carrosserie et portant également au moins une unité de commande (12), une pompe hydraulique (16), et des raccordements (14) pour des lignes de commande (21) qui mènent à des unités d'entraînement (4) pour le mouvement du toit,
**caractérisé en ce que**
ledit support (9) peut être monté dans une poche latérale de la carrosserie, devant ou derrière un passage de roue (10).

2. Véhicule cabriolet (1) selon la revendication 1,
**caractérisé en ce que**
le support (9) peut être prémonté et testé en dehors de la carrosserie en ce qui concerne le fonctionnement de l'élément (des éléments) d'entraînement (8) pour le couvercle (7) ainsi que des unités d'entraînement (4) pour le mouvement du toit.

3. Véhicule cabriolet (1) selon l'une quelconque des revendications 1 ou 2,
**caractérisé en ce que**
le support (9) comprend une feuille métallique d'une seule pièce, qui est chanfreinée plusieures fois et qui est pourvue d'alésages et de brides de raccordement (11;13;15;17).

4. Véhicule cabriolet (1) selon l'une quelconque des revendications 1 à 3,
**caractérisé en ce que**
le couvercle (7) est mobile au moyen d'un seul élément d'entraînement (8).

5. Véhicule cabriolet (1) selon l'une quelconque des revendications 1 à 4,
**caractérisé en ce que**
l'élément d'entraînement (8) passe par une ouverture de passage (18) du support (9).
